# FASCICULE DE BREVET EUROPEEN

(11) **EP 3 439 897 B1**
(45) Date de publication et mention de la délivrance du brevet: **11.03.2020**
(21) Numéro de dépôt: 17720851.9
(22) Date de dépôt: 05.04.2017
(51) Int. Cl.: B60C 11/04, B60C 11/03, B60C 11/13

(54) **BANDE DE ROULEMENT POUR PNEU**
REIFENLAUFFLÄCHE
TYRE TREAD

(30) Priorité: 08.04.2016 FR 1653114
(43) Date de publication de la demande: 13.02.2019
(73) Titulaire: Compagnie Générale des Etablissements Michelin, 63000 Clermont-Ferrand (FR)
(72) Inventeur: KEEFE, Brian, 63040 CLERMONT FERRAND CEDEX 9 (FR); DJABOUR, Walid, 63040 CLERMONT FERRAND CEDEX 9 (FR); LARREGAIN, Arnaud, 63040 CLERMONT FERRAND CEDEX 9 (FR)
(74) Mandataire: Lasson, Cédric Yves
(86) Numéro de dépôt international: PCT/FR2017/050798
(87) Numéro de publication internationale: WO 2017/174926

(56) Documents cités:
- EP-A2- 0 206 227
- WO-A1-2015/086622
- WO-A2-02/38399
- FR-A1- 3 014 747

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau sur la chaussée sont rendues plus pérennes avec l'usure, ces bandes de roulement ayant en outre des performances améliorées en usure.

### ÉTAT DE LA TECHNIQUE

De façon connue, l'utilisation de pneus sur véhicule dans des conditions de roulage par temps de pluie requiert une élimination rapide de l'eau présente dans la région de contact du pneu avec la chaussée afin d'assurer un contact du matériau constituant la bande de roulement avec cette chaussée et ainsi pouvoir générer des efforts de motricité et de freinage tout en contrôlant la trajectoire du véhicule. L'eau qui n'est pas repoussée sur l'avant du pneu s'écoule ou est captée en partie dans les rainures formées dans la bande de roulement du pneu afin de permettre le contact entre le pneu et la chaussée.

Les rainures forment un réseau d'écoulement de l'eau qui se doit d'être pérenne c'est-à-dire être efficace pendant toute la durée d'usage d'un pneu entre son état neuf et son retrait dès lors que son usure atteint la limite fixée par la réglementation.

Pour les pneus destinés aux essieux directeur ou aux essieux porteur d'un véhicule poids lourd, il est usuel de former, dans la bande de roulement de ces pneus, des rainures circonférentielles (ou longitudinales) dont la profondeur est égale à l'épaisseur totale de la bande de roulement (cette épaisseur totale ne prenant pas en compte l'épaisseur éventuellement prévue pour permettre un renouvellement partiel des rainures par une opération dite de recreusage - « regrooving » en anglais) dans l'épaisseur restante. Ainsi, une bande de roulement a une performance en drainage de l'eau qui est toujours au moins égale à une performance minimale dite performance de sécurité et cela quel que soit le niveau de l'usure de cette bande.

Pour les pneus de l'état de la technique, le volume total de creux à neuf est en règle générale de l'ordre d'au moins 10% et au plus égal à 35% du volume total de la bande de roulement destiné à être usé pendant le roulage. Le volume de creux comprend à neuf le volume de toutes les rainures, incisions et cavités formées dans la bande de roulement ; le volume total de bande correspond au volume de matière pris jusqu'au fond des cavités les plus à l'intérieur de la bande auquel est ajouté le volume total de creux.

On constate que les pneus de l'état de la technique ont un volume de creux disponible dans l'aire de contact qui est relativement important à l'état neuf ; le volume de creux disponible signifie que ce volume peut être rempli en partie ou en totalité par l'eau présente sur la chaussée notamment par temps de pluie. Le volume de creux s'ouvrant sur la surface de roulement dans le contact est évalué lorsque le pneu est soumis à ses conditions usuelles de gonflage et d'écrasement en statique telles que définies notamment par le standard E.T.R.T.O. pour l'Europe.

Si des rainures ou plus généralement des cavités sont indispensables au drainage de l'eau dans la région de contact avec une chaussée, la diminution de matière qui en résulte sur la bande peut affecter sensiblement la performance en usure de cette bande et en conséquence réduire la durée d'utilisation du pneu résultant notamment par une augmentation de la vitesse d'usure de ladite bande. D'autres performances du pneu peuvent aussi être affectées comme les performances en comportement, en émission de bruit en roulage, voire en résistance au roulement.

Il est également observé que ces rainures, formées pour avoir une profondeur utile égale à la hauteur de bande à user, peuvent être la cause de problèmes d'endurance. Dans certaines conditions de roulage, des objets comme des cailloux peuvent être coincés dans ces rainures et venir agresser le fond de ces rainures et générer l'apparition de cassures dans la matière formant la bande de roulement. Ces cassures peuvent être à l'origine d'infiltration d'eau dans la bande jusqu'aux armatures de renfort.

La réalisation d'une pluralité de rainures sur une bande de roulement a donc pour inconvénient de réduire la quantité de matière de bande pour une largeur donnée de bande et par voie de conséquence de réduire la durée d'utilisation du pneu à cause d'une vitesse d'usure trop élevée.

Par ailleurs, les rainures génèrent un abaissement des rigidités de compression et de cisaillement puisque ces rainures délimitent des portions de matière sensibles à la déformation comparativement aux portions délimitées par des incisions. En effet, dans le cas d'une incision, les parois de matière délimitant cette incision peuvent venir en contact l'une contre l'autre au moins en partie lors du passage dans la région de contact avec la chaussée. Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

Pour limiter l'abaissement de rigidité liée à la présence des rainures nécessitée par le besoin d'assurer le drainage de l'eau, il a été proposé une solution décrite dans la publication de brevet EP 206227 selon laquelle il était formé une rainure comprenant des parties ouvertes reliées entre elles par des incisions se terminant dans la profondeur par des canaux assurant une continuité de circulation des fluides.

Il est également connu le document WO 2011/039194 dans lequel il est proposé une bande de roulement pour pneu ayant une épaisseur de matière à user, cette bande étant pourvue d'une pluralité de rainures ondulantes s'ouvrant de façon discontinue sur la surface de roulement à neuf et ayant une géométrie ondulant dans la direction de l'épaisseur de la bande. Chaque rainure ondulante est discontinue en surface mais continue à neuf dans l'intérieur de la bande afin de permettre un écoulement de fluide. Cette rainure ondulante est formée dans la bande de roulement par une succession de cavités externes s'ouvrant sur la surface de roulement à neuf reliées à une pluralité de cavités internes, ces dernières étant placées radialement et en totalité à l'intérieur de la surface de roulement à l'état neuf entre les cavités externes. Les cavités internes peuvent être prévues pour être à des profondeurs différentes à l'intérieur de la bande.

En outre, la continuité de l'écoulement d'eau dans chaque rainure ondulante à neuf est assurée par une continuité de passage entre les cavités externes et les cavités internes. Cette continuité est réalisée par des cavités de liaison reliant cavités externes et cavités internes. Grâce à la présence de ces cavités de liaison, il est possible d'assurer une circulation de l'eau d'une cavité externe vers une cavité interne et ainsi d'obtenir un meilleur drainage de l'eau.

Pour faciliter le moulage et le démoulage de ce type de rainure ondulante, il a été envisagé de combiner chaque rainure ondulante avec des incisions prolongeant les cavités internes jusqu'à la surface de roulement à neuf.

Grâce à cette structure de bande de roulement, on obtient un volume de creux approprié et réduit par rapport à celui des rainures usuelles tout en réalisant un drainage satisfaisant à neuf. Ce type de rainure permet de limiter la diminution de rigidité de la bande de roulement à l'état neuf.

Si ce type de rainure est performant à neuf et jusqu'à une usure partielle correspondant à la disparition des cavités externes, force est de constater que lorsque les cavités internes s'ouvrent sur la surface de roulement, ces cavités ne sont plus reliées les unes aux autres et qu'il est nécessaire de prévoir un réseau additionnel d'écoulement par exemple en formant à l'état neuf des cavités sous la surface de roulement se transformant en rainures continues après usure partielle. Ce réseau additionnel a pour conséquence de générer un abaissement de la rigidité.

Le document EP1341679 B1 montre une bande de roulement comprenant une rainure formée d'une succession de parties larges et de parties étroites de type incision. Cette succession se retrouve à la fois dans la direction principale de la rainure et dans la direction de la profondeur. Dans cet exemple il n'y a pas de continuité des volumes de rainure large ; en conséquence et afin d'assurer une performance d'écoulement nécessaire au bon drainage, il est nécessaire de compléter le dessin de cette bande de roulement avec des canaux additionnels qui ne deviennent actifs que lorsqu'ils débouchent sur la surface de roulement.

Le besoin s'est donc fait sentir de conserver un drainage efficace quel que soit le niveau d'usure tout en réduisant au juste nécessaire le volume de creux sans pénaliser la performance en usure que ce soit en vitesse d'usure ou en régularité d'usure. C'est l'objet de la présente invention.

### Définitions :

Plan médian équatorial : c'est un plan perpendiculaire à l'axe de rotation et passant par les points du pneu radialement les plus éloignés dudit axe.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une bande de roulement a une épaisseur maximale E de matière à user en roulage, cette épaisseur maximale étant inférieure à la profondeur des rainures les plus profondes afin de conserver un drainage suffisant même lorsque la bande atteint son niveau d'usure maximal.

Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage telles que définies par exemple par l'E.T.R.T.O..

Les découpures génèrent un volume total de creux à neuf dans la bande de roulement ; le ratio entre ce volume total de creux et le volume total de la bande incluant le volume des creux correspond à ce que l'on nomme taux de creux volumique. Le rapport entre la surface de creux s'ouvrant sur la surface de roulement à un état d'usure donné et la surface totale correspond à un taux de creux surfacique.

Une rainure est dite continue dès lors qu'elle est ouverte sur la surface de roulement à neuf et cela sur toute sa longueur selon sa direction principale.

Une rainure est dite discontinue en surface dès lors qu'elle est formée d'une succession de parties ouvertes sur la surface de roulement à neuf, ces parties étant disjointes les unes des autres dans la direction principale de cette rainure (c'est à dire dans la direction de l'écoulement principal dans la rainure).

La surface moyenne d'une rainure continue ou discontinue est définie comme une surface virtuelle divisant cette rainure, dans la direction principale de cette rainure, en deux parties égales ou sensiblement égales en volume.

La direction principale d'une rainure correspond à la direction d'un écoulement d'eau dans la rainure lors du roulage sur une chaussée revêtue d'eau.

### BREF EXPOSE DE L'INVENTION

La présente invention vise à obtenir une bonne performance de roulage par temps de pluie tout en proposant un dessin de sculpture de bande de roulement amélioré en usure et plus particulièrement réduisant les risques d'usure irrégulière.

À cet effet, l'invention a pour objet une bande de roulement de pneu comprenant une surface de roulement destinée à venir en contact avec une chaussée en roulage, cette bande de roulement ayant une épaisseur E correspondant à l'épaisseur de matière à user. Cette bande de roulement comprend au moins une rainure s'ouvrant à l'état neuf sur la surface de roulement de la bande, cette rainure ayant une profondeur maximale P et une largeur maximale L1 en surface de roulement à neuf, cette rainure comprenant une pluralité de premiers et seconds morceaux de rainure.

Chaque premier morceau de rainure est délimité par des parois en vis-à-vis distantes d'une largeur maximale L1 mesurée sur la surface de roulement à neuf, ces parois se rapprochant l'une de l'autre pour être, à une profondeur intermédiaire H11 comprise entre 20 et 80% de la profondeur maximale P de la rainure, distantes d'une largeur minimale L1' inférieure à la largeur maximale L1, cette largeur minimale L1' étant appropriée pour que les parois en vis-à-vis viennent en contact lors du passage dans le contact avec la chaussée. Ces mêmes parois s'éloignent l'une de l'autre jusqu'à la profondeur P de la rainure pour être distantes l'une de l'autre d'une largeur de fond de rainure L1".

Chaque second morceau de rainure est délimité par des parois en vis-à-vis distantes a une largeur minimale L2 mesurée sur la surface de roulement à neuf, ces parois s'éloignant l'une de l'autre pour être, à une profondeur intermédiaire H21 comprise entre 20 et 80% de la profondeur totale P de la rainure, distante l'une de l'autre d'une largeur maximale L2' supérieure à la largeur minimale L2, la largeur minimale L2 étant appropriée pour que les parois en vis-à-vis viennent en contact lors du passage dans le contact avec la chaussée au moins à neuf. Ces mêmes parois du deuxième morceau de rainure se rapprochent ensuite l'une de l'autre jusqu'à la profondeur P de la rainure pour être distantes d'une largeur de fond de rainure L2".

Cette rainure est formée d'une pluralité de premiers et deuxièmes morceaux de rainure disposés en alternance et de façon continue les uns après les autres de façon à former un passage continu dans la direction principale de la rainure et cela entre tous les morceaux afin de permettre un écoulement de liquide dans la rainure quel que soit le niveau d'usure.

Les passages élémentaires sont disposés radialement l'un au-dessus de l'autre et sont disjoints dans la direction de la profondeur lors du passage dans le contact avec la chaussée. De façon préférentielle les hauteurs intermédiaires H11, H21 sont comprises entre 40 et 60% de la profondeur P de la rainure. Encore plus préférentiellement, les hauteurs H11 et H12 sont identiques.

Dans une variante intéressante, la surface de chaque passage élémentaire est au moins égale à 25 % de la surface de section d'une rainure de profondeur P et de largeur constante L1.

Avantageusement, la largeur maximale L2' des deuxièmes morceaux de rainure est égale à la largeur maximale L1 des premiers morceaux de rainure.

Avantageusement, les portions étroites de chaque premier morceau de rainure et deuxième morceau de rainure sur lesquelles les parois en vis-à-vis de la rainure viennent en contact, ont des hauteurs, respectivement E1, E2, ces hauteurs pouvant être plus grandes que zéro afin de réaliser un appui mécanique suffisant.

De la sorte, on obtient un volume utile pour le drainage qui est optimal quel que soit l'état d'usure tout en augmentant la quantité de matière en contact avec la chaussée ce qui a pour effet d'augmenter la durée de vie sur usure avec une fermeture par contact ponctuel à l'intérieur de la rainure.

Si on note D1 la longueur des premiers morceaux de rainure et D2 celle des deuxièmes morceaux de rainure, il est avantageux que ces deux longueurs soient égales.

La largeur maximale L2' des deuxièmes morceaux de rainure peut être identique ou différente de la largeur maximale L1 des premiers morceaux de rainure.

Grâce à l'objet de l'invention, le profil d'arête sur la surface de roulement varie de façon régulière avec l'usure ce qui est également favorable sur la forme d'usure qui en résulte.

Avec de telles rainures il est avantageux de construire une bande de roulement pour pneu de poids lourd dont le taux de creux en volume à neuf est compris entre 5% et 16%. Encore plus préférentiellement le taux de creux en volume est compris entre 7 et 12%.

Afin de favoriser un écoulement sans trop de pertes de charge, il est judicieux de prévoir entre les premiers morceaux de rainure et les deuxièmes morceaux de rainure des régions de raccordement éliminant les discontinuités géométriques défavorables notamment à l'écoulement de liquide dans la rainure.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue en volume d'une première variante de bande de roulement comportant une rainure selon l'invention ;
La figure 2 montre une vue en coupe de la bande montrée avec la figure 1 selon un plan de coupe dont la trace est repérée par la ligne II-II ;
La figure 3 montre une vue en coupe de la bande montrée avec la figure 1 selon un plan de coupe dont la trace est repérée par la ligne III-III ;
La figure 4 montre les deux passages élémentaires formés pour le drainage dans la rainure.

### DESCRIPTION DES FIGURES

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

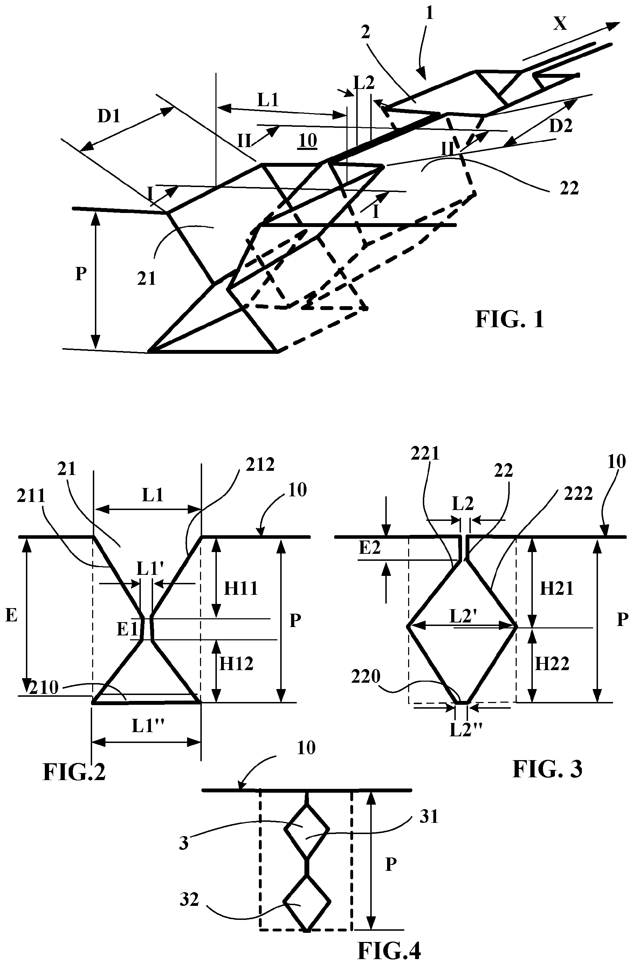

La figure 1 représente une vue en volume d'une première variante de bande de roulement 1 selon l'invention. Selon cette variante, la bande de roulement 1 pour pneu de véhicule poids lourd a une épaisseur E de matière à user. Cette épaisseur E correspond à la limite en usure à partir de laquelle il devient nécessaire de remplacer le pneu usé par un pneu neuf ou à tout le moins de procéder à un rechapage avec une bande de roulement neuve.

Sur cette figure 1 on voit une rainure 2 s'ouvrant sur la surface de roulement 10 à neuf par des parties larges constituant des premiers morceaux 21 de rainure et des parties étroites constituant des deuxièmes morceaux 22 de rainure. Les premiers morceaux de rainure ont une largeur maximale L1 sur la surface de roulement 10 à neuf et une longueur D1, tandis que les deuxièmes morceaux de rainure ont une largeur minimale L2 sur la même surface de roulement et une longueur D2.

Les premiers morceaux 21 de rainure et des deuxièmes morceaux 22 de rainure sont disposés en alternance les uns avec les autres dans la direction circonférentielle (correspondant à la direction longitudinale) de la bande de roulement. Cette direction circonférentielle est repérée par la flèche X sur la figure 1.

Les arêtes formées sur la surface de roulement par cette rainure comportent une pluralité de segments raccordés entre eux de manière relativement abrupte, c'est à dire en faisant entre deux segments consécutifs un angle de 90 degrés. Dans une variante non montrée ici, on peut adapter les géométries de ces arêtes afin que les raccordements soient adoucis notamment en prévoyant que les géométries de ces raccordements ont des pentes continues (dérivées premières continues).

Comme on peut le voir avec la figure 2 montrant une coupe d'un premier morceau 21 de rainure, chaque premier morceau 21 de rainure est limité par des parois 211, 212 en vis-à-vis s'ouvrant sur la surface de roulement 10 à neuf, ces parois 211, 212 étant distantes d'une largeur maximale L1 sur cette surface de roulement à neuf. Ces parois 211, 212 se rapprochent ensuite progressivement l'une de l'autre dans la profondeur de la bande.

À partir d'une profondeur intermédiaire H11, égale dans l'exemple décrit à 50% de la profondeur P de la rainure et sur une hauteur E1, les parois 211, 212 en vis-à-vis sont distantes l'une de l'autre d'une distance faible L1' et appropriée pour que ces parois viennent en contact l'une contre l'autre sur cette hauteur E1 lors du passage dans le contact avec la route.

Ensuite les parois des premiers morceaux de rainure s'écartent l'une de l'autre pour être au fond 210 de la rainure 2 à une distance L1" égale, dans le cas présenté, à la largeur L1 mesurée sur la surface de roulement 10 à neuf.

Pour ce qui concerne les deuxièmes morceaux 22 de rainure et comme on peut le voir avec la figure 3 montrant une coupe selon un plan dont la trace est repéré par la ligne III-III sur la figure 1, les parois 221, 222 en vis-à-vis délimitant ces deuxièmes morceaux de rainure sont suffisamment proches l'une de l'autre sur la surface de roulement 10 à neuf (distance L2) pour venir en contact l'une contre l'autre lors du passage dans le contact avec la route. Ensuite ces parois 221, 222 s'écartent l'une de l'autre de manière progressive pour être à une distance maximale L2' à une profondeur H21, cette dernière profondeur étant, dans le cas présent, égale à 50% de la profondeur P de la rainure 2.

Dans la profondeur restante H22 les deux parois 221, 222 délimitant les deuxièmes morceaux 22 de rainure se rapprochent l'une de l'autre de façon progressive pour être à une distance L2" à la profondeur P, c'est à dire sur le fond 220.

Ainsi il a été possible de former à la fois des creux dont les volumes sont limités au juste nécessaire et en rigidifiant la bande de roulement par la présence de pontage mécanique dans les zones d'appui entre les parois en vis-à-vis. Par ailleurs, il est maintenu un taux de creux surfacique approprié et cela quel que soit le niveau d'usure de la bande.

Par ailleurs, et comme on peut le voir clairement sur la figure 4 montrant en superposition les deux coupes précédentes, on obtient un passage continu 3 entre les différents morceaux de rainure, ce passage 3 permettant un écoulement sans discontinuité entre les premiers et deuxièmes morceaux de rainure et cela quel que soit le niveau d'usure de la bande.

Ce passage continu 3 est formé de deux passages élémentaires 31, 32 continus dans la direction principale de la rainure 2 et disjoints dans la direction de sa profondeur. La surface de section de chaque passage élémentaire 31, 32 est ici sensiblement égale à 20% de la surface totale d'une rainure de profondeur P et de largeur constante égale à la largeur maximale L1 des premiers morceaux de rainure (cette rainure est schématisée sur les figures 2 à 4 par des traits en pointillés). On voit bien que l'on a réduit très sensiblement le volume de creux tout en préservant un drainage approprié quel que soit le niveau d'usure grâce à cette géométrie de rainure.

Dans l'exemple montré et décrit les parois des premiers et deuxièmes morceaux de rainure sont formées de faces planes mais bien entendu ces mêmes parois pourraient être formées de faces curvilignes satisfaisant les mêmes contraintes de construction afin d'atteindre le même résultat à savoir la formation de deux passages élémentaires de drainage, l'un étant situé entre la surface de roulement à neuf et environ la moitié de la profondeur P de la rainure, l'autre étant situé dans la partie entre la moitié de la profondeur et le fond de la rainure.

Dans l'exemple montré et décrit chaque premier morceau de rainure et chaque deuxième morceau de rainure a une section constante. Il est bien entendu envisageable de faire en sorte que chaque morceau de rainure ait une géométrie variable dans la direction principale d'écoulement de la rainure, cette géométrie variable se combinant avec les règles de définition données pour ladite rainure.

Dans une autre variante les premiers et deuxièmes morceaux de rainure ont une même largeur en surface à neuf mais présentent des régions de contact à des profondeurs différentes de manière à générer au moins deux passages pour le drainage.

Dans l'exemple montré pour faire comprendre l'invention, les raccordements entre morceaux de rainure se font de manière abrupte. Bien entendu, il est possible de faire en sorte que ces raccordements soient réalisés de manière à ce qu'il y ait une continuité des pentes prises sur les courbes de niveau. Par courbe de niveau on entend une arête formée par la rainure sur une surface de roulement à un état d'usure de la bande de roulement. On a vu que les premiers morceaux étaient de section constante, comme c'est par ailleurs également le cas des deuxièmes morceaux de rainure. Pour réduire les pertes de charge hydrodynamique il est avantageux de prévoir entre chaque premier morceau de rainure chaque deuxième morceau de rainure une région intermédiaire assurant un raccordement limitant les discontinuités géométriques.

L'invention concerne également un pneu pourvu d'une bande de roulement telle que décrite et encore plus particulièrement un pneu destiné à équiper un véhicule poids lourd.

Bien entendu, l'invention n'est pas limitée aux exemples décrits et représentés et diverses modifications peuvent y être apportées sans sortir du cadre tel que défini par les revendications.

## Revendications

1. Bande de roulement (1) de pneu comprenant une surface de roulement (10) destinée à venir en contact avec une chaussée en roulage, cette bande de roulement ayant une épaisseur (E) correspondant à l'épaisseur de matière à user, cette bande de roulement comprenant au moins une rainure (2) s'ouvrant à l'état neuf sur la surface de roulement (10) de la bande, cette rainure (2) ayant une profondeur maximale (P) et une largeur maximale (L1) en surface de roulement à neuf, cette rainure (2) comprenant une pluralité de premiers et deuxièmes morceaux de rainure, chaque premier morceau (21) de rainure étant délimité par des parois (211, 212) en vis-à-vis distantes d'une largeur maximale (L1) mesurée sur la surface de roulement à neuf, ces parois (211, 212) se rapprochant l'une de l'autre pour être, à une profondeur intermédiaire (H11) comprise entre 20 et 80% de la profondeur maximale (P) de la rainure, distantes d'une largeur minimale (L1') inférieure à la largeur maximale (L1), cette largeur minimale (L1') étant appropriée pour que les parois (211, 212) en vis-à-vis viennent en contact lors du passage dans le contact avec la chaussée, ces mêmes parois (211, 212) s'éloignent l'une de l'autre jusqu'à la profondeur maximale (P) de la rainure pour être distantes l'une de l'autre d'une largeur de fond de rainure (L1"), chaque second morceau (22) de rainure est délimité par des parois (221, 222) en vis-à-vis distantes d'une largeur minimale (L2) mesurée sur la surface de roulement (10) à neuf, ces parois (221, 222) s'éloignant l'une de l'autre pour être, à une profondeur intermédiaire (H21) comprise entre 20 % et 80% de la profondeur maximale (P) de la rainure, distantes l'une de l'autre d'une largeur maximale L2' supérieure à la largeur minimale (L2), la largeur minimale (L2) étant appropriée pour que les parois (221, 222) en vis-à-vis viennent en contact lors du passage dans le contact avec la chaussée au moins à neuf, ces mêmes parois (221, 222) du deuxième morceau (22) de rainure se rapprochant ensuite l'une de l'autre jusqu'à la profondeur maximale (P) de la rainure pour être distantes d'une largeur de fond de rainure (L2"), cette rainure (2) étant **caractérisée en ce qu'elle** est formée d'une pluralité de premiers et deuxièmes morceaux de rainure disposés en alternance et de façon continue les uns après les autres de façon à former un passage continu (3) entre tous les morceaux de rainure afin de permettre un écoulement de liquide dans la rainure et cela quel que soit le niveau d'usure, ce passage continu (3) se décomposant en deux passages élémentaires (31, 32) disposés radialement l'un au-dessus de l'autre.

2. Bande de roulement de pneu selon la revendication 1 **caractérisée en ce que** la surface de chaque passage élémentaires (31, 32) est au moins égale à 25 % de la surface de section d'une rainure de profondeur maximale (P) et de largeur constante égale à la largeur maximale (L1) des premiers morceaux de rainure.

3. Bande de roulement de pneu selon la revendication 1 ou la revendication 2 **caractérisée en ce que** les hauteurs intermédiaires (H11, H21) sont comprises entre 40 et 60% de la profondeur (P) de la rainure.

4. Bande de roulement de pneu selon l'une des revendications 1 à 3 **caractérisée en ce que** les portions de chaque premier morceau (21) de rainure et chaque deuxième morceau (22) de rainure sur lesquelles les parois en vis-à-vis de la rainure viennent en contact, ont des hauteurs, respectivement (E1, E2), ces hauteurs pouvant être plus grandes que zéro afin de réaliser un appui mécanique approprié.

5. Bande de roulement de pneu selon l'une des revendications 1 à 4 **caractérisée en ce que** les premiers morceaux (21) de rainure et les deuxièmes morceaux (22) de rainure sont reliés entre eux par des régions de raccordement éliminant les discontinuités géométriques défavorables notamment à l'écoulement de liquide dans la rainure.

6. Bande de roulement de pneu selon l'une des revendications 1 à 5 **caractérisée en ce que** le taux de creux en volume à neuf est compris entre 5% et 16%.

7. Pneu pourvu d'une bande de roulement selon l'une des revendications 1 à 6 et destiné à équiper un essieu d'un véhicule poids lourd.

## Patentansprüche

1. Reifenlaufstreifen (1) mit einer Lauffläche (10), die dazu bestimmt ist, beim Rollen mit einer Fahrbahn in Kontakt zu gelangen, wobei dieser Laufstreifen eine Stärke (E) hat, die der abzunutzenden Materialstärke entspricht, wobei dieser Laufstreifen mindestens eine Rille (2) umfasst, die sich im Neuzustand auf der Lauffläche (10) des Streifens öffnet, wobei diese Rille (2) eine maximale Tiefe (P) und eine maximale Breite (L1) an der Lauffläche im Neuzustand hat, wobei diese Rille (2) eine Vielzahl von ersten und zweiten Rillenstücken umfasst, wobei jedes erste Rillenstück (21) durch einander gegenüber liegende Wände (211, 212) begrenzt wird, die um eine maximale Breite (L1), gemessen an der Lauffläche im Neuzustand, entfernt sind, wobei sich diese Wände (211, 212) einander annähern, um in einer Zwischentiefe (H11) zwischen 20 und 80% der maximalen Tiefe (P) der Rille um eine minimale Breite (L1') entfernt zu sein, die kleiner als die maximale Breite (L1) ist, wobei diese minimale Breite (L1') dazu geeignet ist, dass die einander gegenüber liegenden Wände (211, 212) beim Übergang zum Kontakt mit der Fahrbahn in Kontakt gelangen, wobei sich dieselben Wände (211, 212) voneinander bis zur maximalen Tiefe (P) der Rille entfernen, um voneinander um eine Rillenbodenbreite (L1") entfernt zu sein, wobei jedes zweite Rillenstück (22) durch einander gegenüber liegende Wände (221, 222) begrenzt wird, die um eine minimale Breite (L2), gemessen im Neuzustand an der Lauffläche (10), entfernt sind, wobei sich diese Wände (221, 222) voneinander entfernen, um in einer Zwischentiefe (H21) zwischen 20 % und 80 % der maximalen Tiefe (P) der Rille voneinander um eine maximale Breite L2' voneinander entfernt zu sein, die größer als die minimale Breite (L2) ist, wobei die minimale Breite (L2) dazu geeignet ist, dass die einander gegenüber liegenden Wände (221, 222) beim Übergang zum Kontakt mit der Fahrbahn zumindest im Neuzustand in Kontakt gelangen, wobei dieselben Wände (221, 222) des zweiten Rillenstücks (22) sich anschließend bis zu einer maximalen Tiefe (P) der Rille einander annähern, um eine Rillenbodenbreite (L2") entfernt zu sein, wobei diese Rille (2) **dadurch gekennzeichnet ist, dass** sie aus einer Vielzahl von ersten und zweiten Rillenstücken gebildet ist, die im Wechsel kontinuierlich hintereinander angeordnet sind, so dass ein durchgehender Kanal (3) zwischen allen Rillenstücken gebildet wird, um ein Abfließen von Flüssigkeit in der Rille zu ermöglichen, und dies unabhängig vom Abnutzungsgrad, wobei sich dieser durchgehende Kanal (3) aus zwei elementaren Kanälen (31, 32) zusammensetzt, die radial übereinander angeordnet sind.

2. Reifenlaufstreifen nach Anspruch 1, **dadurch gekennzeichnet, dass** die Fläche jedes elementaren Kanals (31, 32) mindestens 25 % der Querschnittsfläche einer Rille mit maximaler Tiefe (P) und konstanter Breite gleich der maximalen Breite (L1) der ersten Rillenstücke beträgt.

3. Reifenlaufstreifen nach Anspruch 1 oder Anspruch 2, **dadurch gekennzeichnet, dass** die Zwischenhöhen (H11, H21) zwischen 40 und 60 % der Tiefe (P) der Rille liegen.

4. Reifenlaufstreifen nach einem der Ansprüche 1 bis 3, **dadurch gekennzeichnet, dass** die Abschnitte jedes ersten Rillenstücks (21) und jedes zweiten Rillenstücks (22), in denen die einander gegenüber liegenden Wände der Rille in Kontakt gelangen, jeweilige Höhen (E1, E2) haben, wobei diese Höhen größer als null sein können, um eine geeignete mechanische Abstützung zu realisieren.

5. Reifenlaufstreifen nach einem der Ansprüche 1 bis 4, **dadurch gekennzeichnet, dass** die ersten Rillenstücke (21) und die zweiten Rillenstücke (22) untereinander durch Verbindungsbereiche verbunden sind, welche die insbesondere für das Abfließen von Flüssigkeit in der Rille ungünstigen geometrischen Diskontinuitäten beseitigen.

6. Reifenlaufstreifen nach einem der Ansprüche 1 bis 5, **dadurch gekennzeichnet, dass** der Hohlraumvolumenanteil im Neuzustand zwischen 5 % und 16 % liegt.

7. Reifen, der mit einem Laufstreifen nach einem der Ansprüche 1 bis 6 versehen ist und dazu bestimmt ist, eine Achse eines Lastkraftwagens auszurüsten.

## Claims

1. Tyre tread (1) comprising a tread surface (10) intended to come into contact with a road surface during running, this tread having a thickness (E) corresponding to the thickness of material to be worn away, this tread comprising at least one groove (2) that opens onto the tread surface (10) of the tread in the new state, this groove (2) having a maximum depth (P) and a maximum width (L1) at the tread surface when new, this groove (2) comprising a plurality of first and second portions of groove, each first portion (21) of groove being delimited by facing walls (211, 212) spaced apart by a maximum width (L1) measured at the tread surface when new, these walls (211, 212) approaching one another such that, at an intermediate depth (H11) between 20 and 80% of the maximum depth (P) of the groove, they are spaced apart by a minimum width (L1') less than the maximum width (L1), this minimum width (L1') being appropriate for the facing walls (211, 212) to come into contact when in the contact patch in contact with the road surface, these same walls (211, 212) diverging from one another down to the maximum depth (P) of the groove such that they are spaced apart from one another by a groove-bottom width (L1"), each second portion (22) of groove being delimited by facing walls (221, 222) spaced apart by a minimum width (L2) measured at the tread surface (10) when new, these walls (221, 222) diverging from one another such that, at an intermediate depth (H21) between 20% and 80% of the maximum depth (P) of the groove, they are spaced apart from one another by a maximum width (L2') greater than the minimum width (L2), the minimum width (L2) being appropriate for the facing walls (221, 222) to come into contact when in the contact patch in contact with the road surface at least when new, these same walls (221, 222) of the second portion (22) of groove then approaching one another down to the maximum depth (P) of the groove such that they are spaced apart by a groove-bottom width (L2"), this groove (2) being **characterized in that** it is formed by a plurality of first and second portions of groove that are disposed in alternation and continuously one after another so as to form a continuous passage (3) between all the portions of groove in order to allow liquid to flow in the groove regardless of the level of wear, this continuous passage (3) being broken down into two elementary passages (31, 32) disposed radially one above the other.

2. Tyre tread according to Claim 1, **characterized in that** the surface area of each elementary passage (31, 32) is at least equal to 25% of the cross-sectional area of a groove of maximum depth (P) and constant width equal to the maximum width (L1) of the first portions of groove.

3. Tyre tread according to Claim 1 or Claim 2, **characterized in that** the intermediate heights (H11, H21) are between 40 and 60% of the depth (P) of the groove.

4. Tyre tread according to one of Claims 1 to 3, **characterized in that** the parts of each first portion (21) of groove and each second portion (22) of groove in which the facing walls of the groove come into contact have heights, (E1, E2) respectively, these heights being able to be greater than zero in order to realize appropriate mechanical support.

5. Tyre tread according to one of Claims 1 to 4, **characterized in that** the first portions (21) of groove and the second portions (22) of groove are joined together by connecting regions that eliminate the geometric discontinuities that are unfavourable notably to the flow of liquid in the groove.

6. Tyre tread according to one of Claims 1 to 5, **characterized in that** the voids volume ratio when new is between 5% and 16%.

7. Tyre comprising a tread according to one of Claims 1 to 6 and intended to be fitted to an axle of a heavy-duty vehicle.
